# EUROPÄISCHE PATENTSCHRIFT

(11) **EP 3 611 407 B1**
(45) Veröffentlichungstag und Bekanntmachung des Hinweises auf die Patenterteilung: **08.06.2022**
(21) Anmeldenummer: 19188821.3
(22) Anmeldetag: 29.07.2019
(51) Int. Cl.: F16J 15/34

(54) **GLEITRINGDICHTUNG**
SLIP RING SEAL
JOINT D'ÉTANCHÉITÉ ROTATIF

(30) Priorität: 17.08.2018 DE 102018120039
(43) Veröffentlichungstag der Anmeldung: 19.02.2020
(73) Patentinhaber: Carl Freudenberg KG, 69469 Weinheim (DE)
(72) Erfinder: Schäfer, Erwin, 67240 Bobenheim-Roxheim (DE); Simon, Clemens, 82362 Weilheim (DE)

(56) Entgegenhaltungen:
- CH-A5- 616 994
- DE-A1-102009 058 341
- FR-A1- 2 601 430

## Beschreibung

### Technisches Gebiet

Die Erfindung betrifft eine Gleitringdichtung, umfassend einen flüssigkeitsdurchströmbaren Kühlkreislauf mit einem Flüssigkeitszulauf und einem Flüssigkeitsablauf, einen ersten Gleitring, einen koaxial zum ersten Gleitring angeordneten zweiten Gleitring und einen Gegenring, wobei die Gleitringe und der Gegenring jeweils zumindest eine Dichtungsfläche aufweisen, wobei die jeweils zumindest eine Dichtungsfläche der Gleitringe die zumindest eine Dichtungsfläche des Gegenrings dichtend anliegend berühren, wobei der erste Gleitring zumindest einen ersten Kühlkanal aufweist, der als Zu- oder Ableitung zu oder von den Dichtungsflächen ausgebildet ist, wobei der zweite Gleitring zumindest einen zweiten Kühlkanal aufweist, der als Ab- oder Zuleitung von oder zu den Dichtungsflächen ausgebildet ist, wobei die Zu- oder Ableitung des ersten Gleitrings und die Ab- oder Zuleitung des zweiten Gleitrings auf den in radialer Richtung einander zugewandten Umfangsseiten der Gleitringe angeordnet sind und einen einstückigen Bestandteil des jeweiligen Gleitrings bilden und wobei der Flüssigkeitszulauf mit der Zuleitung und der Flüssigkeitsablauf mit der Ableitung strömungsleitend verbunden ist.

### Stand der Technik

Eine solche Gleitringdichtung ist aus der DE 10 2009 058 341 A1 bekannt. Die Gleitringdichtung gelangt in einer hydrodynamischen Maschine, insbesondere in einem hydrodynamischen Retarder, zur Anwendung, wobei der Retarder ein erstes umlaufendes Schaufelrand und ein zweites ebenfalls umlaufendes oder stationäres Schaufelrad umfasst und eine Antriebswelle, um das erste oder das zweite Schaufelrad mechanisch anzutreiben, wobei die Antriebswelle mittels der Gleitringdichtung gegen das Gehäuse des Retarders abgedichtet ist, um einen Austritt von Arbeitsmedium zwischen der Antriebswelle und dem Gehäuse zu verhindern.

Zwischen dem ersten, radial inneren Gleitring und dem zweiten, radial äußeren Gleitring ist ein Einsatz eingebracht, der eine Strömungsfunktion für die in die Gleitringdichtung eingeleitete und zum Dichtspalt geförderte Sperrflüssigkeit hat. Der Einsatz weißt eine L-Form auf, wobei der vergleichsweise längere Schenkel parallel zur Drehachse der Antriebsachse verläuft und der vergleichsweise kürzere Schenkel senkrecht hierzu. Dabei ist der vergleichsweise kürzere Schenkel derart zwischen den zweiten Gleitring und einer radial äußeren Feder eingebracht, dass die Feder ihre Druckkraft über den Einsatz auf den zweiten Gleitring ausübt, wohingegen eine außerdem radial innere Feder ihre Druckkraft auf den ersten Gleitring ohne Zwischenhaltung eines weiteren Elements unmittelbar ausübt.

Die vorbekannte Gleitringdichtung umfasst viele Einzelteile, die zunächst hergestellt und zur Gleitringdichtung montiert werden müssen.

Eine weitere Gleitringdichtung ist aus der DE 2009 055 637 A1 bekannt. Die vorbekannte Gleitringdichtung umfasst einen als separates Bauteil ausgebildeten Einsatz zur Kühlflüssigkeitsführung, der koaxial und in radialer Richtung betrachtet zwischen den Gleitringen angeordnet ist. Dieser Einsatz benötigt Einbauraum im Kühlkreislauf. Durch den Einsatz wird die im Kühlkreislauf befindliche Kühlflüssigkeit zu den Dichtungsflächen der Gleitringe und des Gegenrings geführt, um die Reibwärme, die während der bestimmungsgemäßen Verwendung der Gleitringdichtung an den Dichtungsflächen entsteht, abführen zu können. Die Gleitringe und der Einsatz bilden bei der vorbekannten Gleitringdichtung eine vormontierte Einheit.

### Darstellung der Erfindung

Der Erfindung liegt die Aufgabe zu Grunde, eine Gleitringdichtung der eingangs genannten Art derart weiterzuentwickeln, dass diese durch einen optimierten Kühlkreislauf besser gekühlt ist und einen einfachen sowie teilearmen Aufbau aufweist und daher einfach und kostengünstig herstellbar ist. Außerdem soll die Montage der Gleitringdichtung vereinfacht werden. Die Gefahr von Montagefehlern soll auf ein Minimum begrenzt sein.

Diese Aufgabe wird erfindungsgemäß durch eine Gleitringdichtung gemäß Anspruch 1 gelöst. Auf vorteilhafte Ausgestaltungen nehmen die Unteransprüche Bezug.

Zur Lösung der Aufgabe ist es vorgesehen, dass die Kühlkanäle jeweils im Wesentlichen nutförmig ausgebildet und radial in Richtung des jeweils anderen Gleitrings offen sind.

Hierbei ist von Vorteil, dass ein separat erzeugter, zusätzlicher Einsatz zur Kühlflüssigkeitsführung nicht erforderlich ist. Einbauraum im Kühlkreislauf für einen separat erzeugten, zusätzlichen Einsatz wird nicht benötigt, so dass die erfindungsgemäße Gleitringdichtung kompakt bauen kann und/oder ein um den nicht benötigten Einbauraum vergrößertes Volumen des Kühlkreislauf für eine bessere Kühlung genutzt werden kann. Die Kühlflüssigkeitsführung erfolgt durch die einander zugewandten Umfangsflächen der Gleitringe. Die Kühlflüssigkeit führenden Kühlkanäle bilden einen einstückigen Bestandteil der jeweiligen Gleitringe. Die Gleitringe selbst übernehmen daher die Aufgabe der Kühlflüssigkeitsführung durch die Gleitringdichtung. Dadurch wird der Wärmeübergang optimiert und es kann mehr Kühlmedium fließen.

Vorteilhaft ist der Flüssigkeitszulauf strömungsleitend mit den bevorzugt mehreren Kühlkanälen des radial inneren Gleitrings verbunden, wobei diese die Zuleitung zu den Dichtungsflächen von Gleitringen und Gegenring bilden. Der Flüssigkeitsablauf ist dann strömungsleitend mit den bevorzugt mehreren Kühlkanälen des radial äußeren Gleitrings strömungsleitend verbunden. Durch diese Kühlkanäle wird die Kühlflüssigkeit von den Dichtungsflächen abgeleitet. Die Zuleitung am radial inneren Gleitring und die Ableitung am radial äußeren Gleitring vorzusehen ist vorteilhaft, weil durch die Zentrifugalkräfte, die während der bestimmungsgemäßen Verwendung der Gleitringdichtung durch den relativ zu den Gleitringen rotierenden Gegenring erzeugt werden, die Zirkulation im Kühlkreislauf unterstützt wird.

Die Kühlkanäle sind jeweils im Wesentlichen nutförmig ausgebildet und radial in Richtung des jeweils anderen Gleitrings offen. Derartige Kühlkanäle sind einfach und kostengünstig herstellbar, zum Beispiel im Vergleich zu Kühlkanälen, die in Form von in der Herstellung sehr teuren Bohrungen ausgeführt sind.

Jeder Gleitring kann zumindest zwei Zu- oder Ablaufleitungen aufweisen, die weiter bevorzugt gleichmäßig in Umfangsrichtung verteilt angeordnet sind. Die Anzahl und/oder Dimensionierung der Zu- oder Ableitungen ist auch abhängig vom Volumenstrom durch den Kühlkreislauf, der erforderlich ist, um die an den Dichtungsflächen entstehende Reibwärme ausreichend und zuverlässig abführen zu können.

Für die meisten Anwendungsfälle sind zwei Zu- und zwei Ableitungen ausreichend. Herstellungsaufwand und Nutzen stehen bei derartigen Ausgestaltungen in einem guten Verhältnis.

Gemäß einer vorteilhaften Ausgestaltung kann es vorgesehen sein, dass die zumindest zwei Zuleitungen des einen Gleitrings den zumindest zwei Ableitungen des anderen Gleitrings, in Umfangsrichtung betrachtet, auf Lücke zugeordnet sind. Eine solche Anordnung der Zuleitungen und Ableitungen relativ zueinander sorgt für klare Strömungsverhältnisse innerhalb des Kühlkreislaufs.

Der Gegenring kann zwei Dichtungsflächen aufweisen, von denen eine von der Dichtungsfläche des ersten Gleitrings und eine von der Dichtungsfläche des zweiten Gleitrings dichtend anliegend berührt ist. Durch eine solche Ausgestaltung wird erreicht, dass die beiden Dichtungsflächen des Gegenrings einander mit radialem Abstand benachbart zugeordnet sind, wobei die Gleitringe und der Gegenring einen im Wesentlichen ringförmigen Kühlraum begrenzen. Das Volumen des Kühlraums ist durch die beiden mit radialem Abstand benachbart zueinander angeordneten Dichtungsflächen maximiert. Reibwärme wird dadurch besonders wirkungsvoll von den Dichtungsflächen der Gleitringe und des Gegenrings abgeführt.

Die Zirkulation der Kühlflüssigkeit durch den Kühlkreislauf kann bevorzugt dadurch begünstigt werden, dass in dem durch den Abstand gebildeten Spalt zumindest eine sich in radialer Richtung erstreckende Förderrippe angeordnet ist.

Weiter bevorzugt sind in dem Spalt zumindest zwei gleichmäßig in Umfangsrichtung verteilte Förderrippen angeordnet.

Für die meisten Anwendungsfälle ist von Vorteil, wenn vier bis acht gleichmäßig in Umfangsrichtung verteilt angeordnete Förderrippen in dem Spalt angeordnet sind. Dadurch wird einerseits das Volumen des Kühlraums nicht unnötig stark eingeschränkt, und andererseits ist der Förderdruck im Kühlkreislauf ausreichend groß, um Reibwärme von den Dichtungsflächen in ausreichendem Maße und rasch abführen zu können. Eine unerwünscht große Wärmeentwicklung an den Dichtungsflächen wird verhindert.

Um das Strömungsverhalten der Kühlflüssigkeit durch den Kühlkreislauf weiter zu optimieren, kann es vorgesehen sein, dass der die zumindest eine Ableitung aufweisende Gleitring zur partiellen Erhöhung des Staudrucks im Kühlkreislauf in Umfangsrichtung benachbart zur Ableitung eine Staukante aufweist. Dadurch wird die Kühlflüssigkeit mit größerem Druck vom Kühlraum durch die Ableitung in den Flüssigkeitsablauf gefördert; Reibwärme wird schneller von den Dichtungsflächen abgeführt, so dass die Gleitringdichtung problemlos in einem für eine lange Gebrauchsdauer thermisch unkritischen Bereich betrieben werden kann.

Die erfindungsgemäße Gleitringdichtung kann in Fahrzeugen, insbesondere in Nutzfahrzeugen, zur Anwendung gelangen, zum Beispiel in hydraulischen Bremssystemen.

### Kurzbeschreibung der Zeichnung

Ein Ausführungsbeispiel der erfindungsgemäßen Gleitringdichtung wird nachfolgend anhand der Figuren 1 bis 5 näher beschrieben.

Die Figuren 1 bis 5 zeigen jeweils in schematischer Darstellung:
- Figur 1: einen Schnitt durch den Flüssigkeitszulauf der Gleitringdichtung,
- Figur 2: einen Schnitt durch den Flüssigkeitsablauf der Gleitringdichtung,
- Figur 3: eine Ansicht auf die beiden Dichtungsflächen der Gleitringe gemäß Figuren 1 und 2,
- Figur 4: eine perspektivische Darstellung des Gegenrings mit Sicht auf die Dichtungsflächen und die Förderrippen,
- Figur 5: eine perspektivische Darstellung des Gleitrings, der die Ableitungen aufweist, wobei in Umfangsrichtung benachbart zu den Ableitungen jeweils eine Staukante vorgesehen ist.

### Ausführung der Erfindung

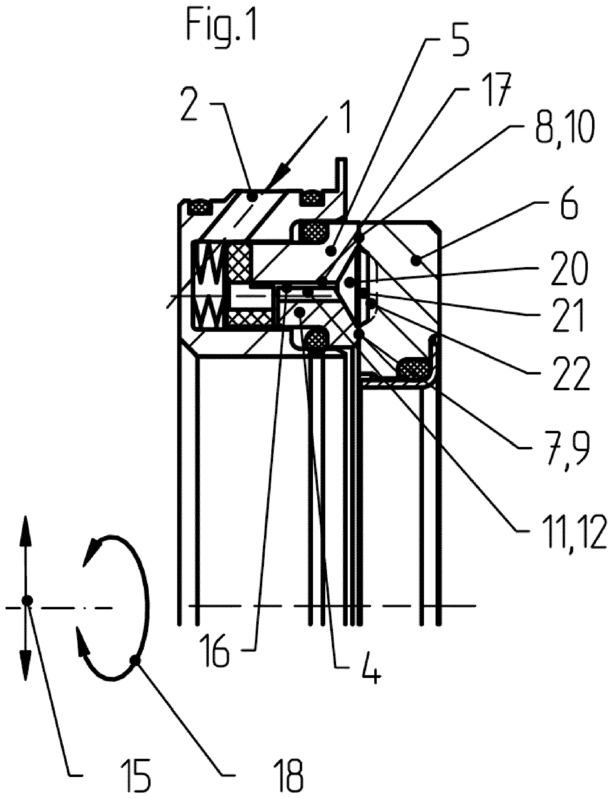

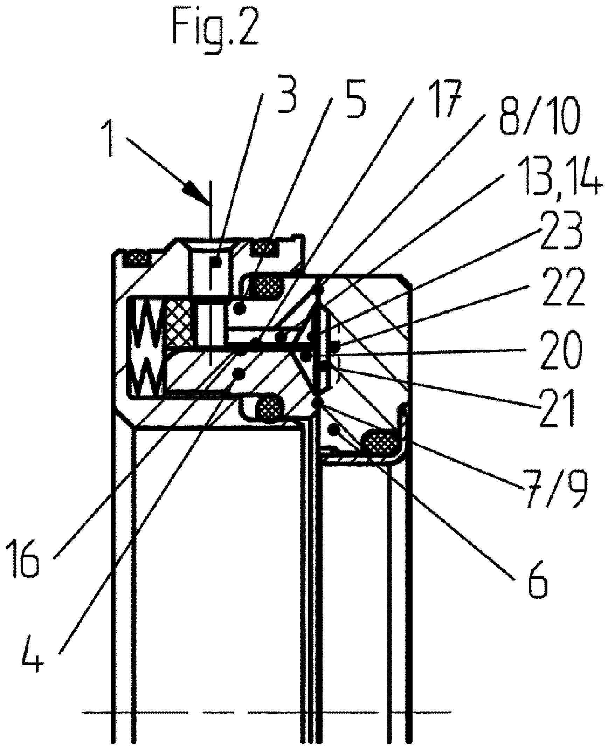

In den Figuren 1 und 2 ist dasselbe Ausführungsbeispiel einer Gleitringdichtung jeweils längsgeschnitten dargestellt, wobei die Schnitte, in Umfangsrichtung 18 betrachtet, um etwa 90° versetzt zueinander sind.

In den Figuren 1 und 2 ist eine Gleitringdichtung gezeigt, die einen flüssigkeitsdurchströmbaren Kühlkreislauf 1 aufweist.

Die Gleitringdichtung kann in einem hydraulischen Bremssystem eines Nutzfahrzeugs verwendet werden.

Der Kühlkreislauf 1 umfasst den Flüssigkeitszulauf 2, der in Figur 1 dargestellt ist, und den Flüssigkeitsablauf 3, der in Figur 2 gezeigt ist sowie die Zu- 12 und Ableitungen 14 der Gleitringe 4, 5 und den in Strömungsrichtung zwischen Zu-12 und Ableitungen 14 angeordneten Kühlraum 20.

Im dargestellten Ausführungsbeispiel ist der erste Gleitring 4 in radialer Richtung 15 innen, der zweite Gleitring 5 in radialer Richtung 15 außen angeordnet, wobei der zweite Gleitring 5 den ersten Gleitring 4 koaxial umschließt.

Stirnseitig auf der dem Gegenring 6 axial zugewandten Seite weisen die Gleitringe 4, 5 jeweils eine Dichtungsfläche 7, 8 auf, die die entsprechenden Dichtungsflächen 9, 10 des Gegenrings 6 unter axialer Vorspannung dichtend berühren. Der erste Gleitring 4 weist als Zuleitungen 12 die ersten Kühlkanäle 11 auf, die sich in axialer Richtung zwischen dem Flüssigkeitszulauf 2 und dem Kühlraum 20 erstrecken.

Der zweite Gleitring 5 umfasst demgegenüber die als Ableitungen 14 ausgebildeten zweiten Kühlkanäle 13, die sich in axialer Richtung vom Kühlraum 20 zum Flüssigkeitsablauf 3 erstrecken. In Richtung des Kühlraums 20 oder vom Kühlraum 20 weg, ist jeweils in Strömungsrichtung des Kühlmittels durch die Gleitringdichtung zu verstehen. Von den Kühlkanälen 13, 14 sind im hier gezeigten Ausführungsbeispiel jeweils zwei vorgesehen, die sich jeweils radial gegenüberliegend zugeordnet sind.

Die ersten Kühlkanäle 11 sind am Außenumfang 16 des ersten Gleitrings 4, die zweiten Kühlkanäle 13 am Innenumfang 17 des zweiten Gleitrings 5 angeordnet, jeweils nutförmig ausgebildet und radial in Richtung des jeweils anderen Gleitrings 5, 4 offen.

Während der bestimmungsgemäßen Verwendung der Gleitringdichtung zirkuliert Kühlflüssigkeit im Kühlkreislauf 1. Die Kühlflüssigkeit strömt durch den Flüssigkeitszulauf 2 in die ersten Kühlkanäle 11 des ersten Gleitrings 4, wobei die Kühlkanäle 11 Zuleitungen 12 zum Kühlraum 20 sind. Im Kühlraum 20 kühlt die Kühlflüssigkeit die Dichtungsflächen 7, 8, 9, 10 der Gleitringe 4, 5 und des Gegenrings 6 und strömt anschließend durch die als Ableitungen 14 ausgebildeten zweiten Kühlkanäle 13, wie in Figur 2 dargestellt, durch den Flüssigkeitsablauf 3 wieder zurück.

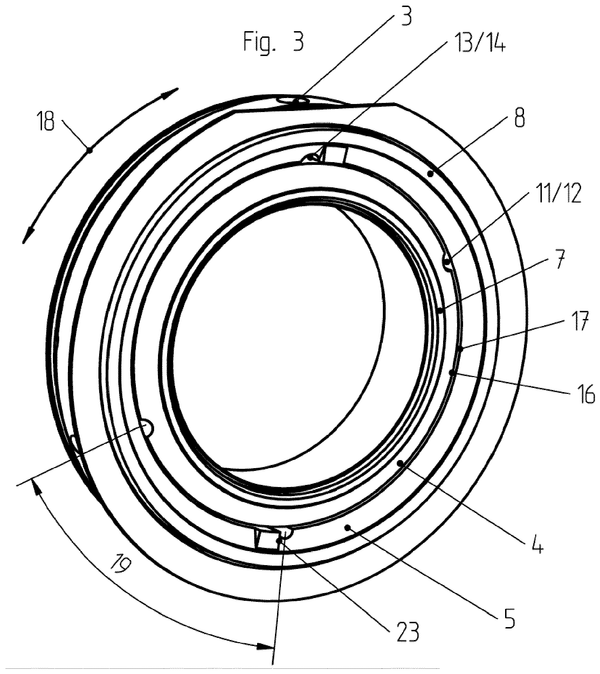

In Figur 3 ist eine Ansicht auf die Dichtungsflächen 7, 8 der beiden Gleitringe 4, 5 gezeigt. Die Zu- 12 und Ableitungen 14 der Gleitringe 4, 5, die durch die Kühlkanäle 11, 13 gebildet sind, sind in radialer Richtung 15 auf den einander zugewandten Umfangsflächen 16, 17 der Gleitringe 4, 5 angeordnet.

Die Zuleitungen 12 des ersten Gleitrings 4 sind den Ableitungen 14 des zweiten Gleitrings 5, in Umfangsrichtung 18 betrachtet, auf Lücke 19 zugeordnet, hier in einem Winkel von etwa 90°.

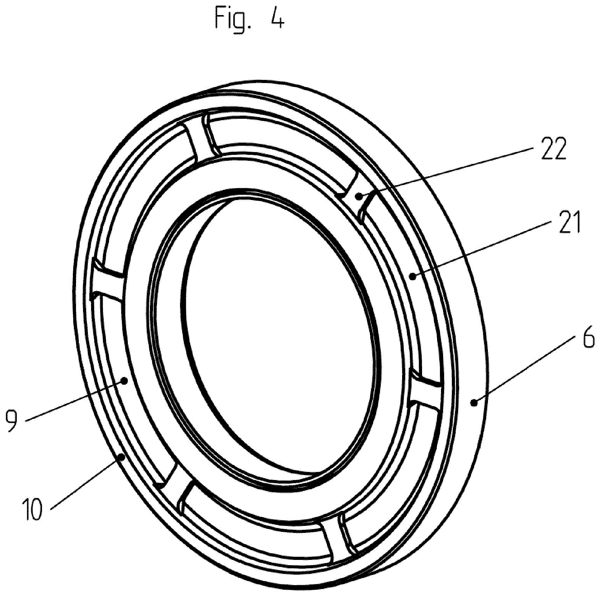

In Figur 4 ist der Gegenring 6 mit seinen Dichtungsflächen 9, 10 gezeigt. Die Dichtungsflächen 9, 10 sind einander mit radialem Abstand benachbart zugeordnet, wobei in dem durch den radialen Abstand gebildeten Spalt 21 sechs gleichmäßig in Umfangsrichtung verteilt angeordnete Förderrippen 22 angeordnet sind, die sich in radialer Richtung 15 erstrecken. Dadurch, dass der Gegenring 6 während des Betriebs der Gleitringdichtung relativ zu den beiden Gleitringen 4, 5 rotiert, unterstützen die Förderrippen 22 die Zirkulation des Kühlmittels im Kühlkreislauf 1.

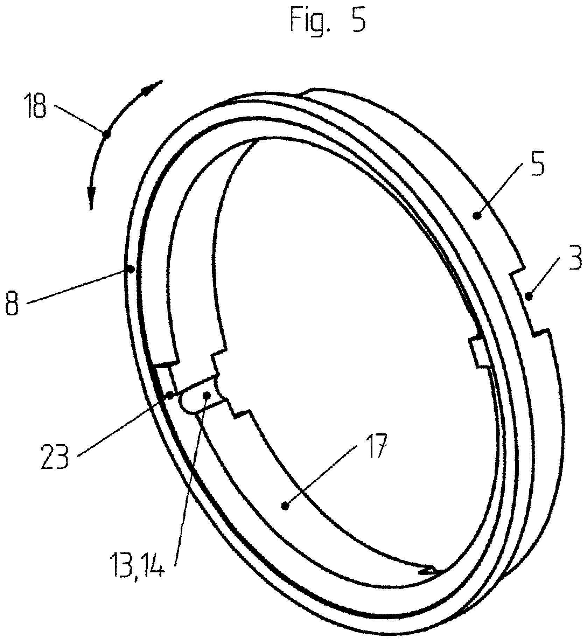

In Figur 5 ist der zweite Gleitring 5 gezeigt, mit seinen zweiten Kühlkanälen 13, die die Ableitungen 14 bilden, wobei zur partiellen Erhöhung des Staudrucks im Kühlkreislauf 1, in Umfangsrichtung 18 benachbart zu den jeweiligen Ableitungen 14, jeweils eine Staukante 23 angeordnet ist.

## Patentansprüche

1. Gleitringdichtung, umfassend einen flüssigkeitsdurchströmbaren Kühlkreislauf (1) mit einem Flüssigkeitszulauf (2) und einem Flüssigkeitsablauf (3), einen ersten Gleitring (4), einen koaxial zum ersten Gleitring (4) angeordneten zweiten Gleitring (5) und einen Gegenring (6), wobei die Gleitringe (4, 5) und der Gegenring (6) jeweils zumindest eine Dichtungsfläche (7, 8, 9, 10) aufweisen, wobei die jeweils zumindest eine Dichtungsfläche (7, 8) der Gleitringe (4, 5) die zumindest eine Dichtungsfläche (9, 10) des Gegenrings (6) dichtend anliegend berühren, wobei der erste Gleitring (4) zumindest einen ersten Kühlkanal (11) aufweist, der als Zu- (12) oder Ableitung zu oder von den Dichtungsflächen (7, 8, 9, 10) ausgebildet ist, wobei der zweite Gleitring (5) zumindest einen zweiten Kühlkanal (13) aufweist, der als Ab- (14) oder Zuleitung von oder zu den Dichtungsflächen (7, 8, 9, 10) ausgebildet ist, wobei die Zu- (12) oder Ableitung des ersten Gleitrings (4) und die Ab- (14) oder Zuleitung des zweiten Gleitrings (5) auf den in radialer Richtung (15) einander zugewandten Umfangsseiten (16, 17) der Gleitringe (4, 5) angeordnet sind und einen einstückigen Bestandteil des jeweiligen Gleitrings (4, 5) bilden und wobei der Flüssigkeitszulauf (2) mit der Zuleitung (12) und der Flüssigkeitsablauf (3) mit der Ableitung (14) strömungsleitend verbunden ist, **dadurch gekennzeichnet, dass** die Kühlkanäle (11, 13)jeweils im Wesentlichen nutförmig ausgebildet und radial in Richtung des jeweils anderen Gleitrings (5, 4) offen sind.

2. Gleitringdichtung nach Anspruch 1, **dadurch gekennzeichnet, dass** jeder Gleitring (4, 5) zumindest zwei Zu- (12) oder Ableitungen (14) aufweist, die gleichmäßig in Umfangsrichtung (18) verteilt angeordnet sind.

3. Gleitringdichtung nach Anspruch 2, **dadurch gekennzeichnet, dass** die zumindest zwei Zuleitungen (12) des einen Gleitrings (4) den zumindest zwei Ableitungen (14) des anderen Gleitrings (5), in Umfangsrichtung (18) betrachtet, auf Lücke (19) zugeordnet sind.

4. Gleitringdichtung nach einem der Ansprüche 1 bis 3, **dadurch gekennzeichnet, dass** der Gegenring (6) zwei Dichtungsflächen (9, 10) aufweist, von denen eine (9) von der Dichtungsfläche (7) des ersten Gleitrings (4) und eine (10) von der Dichtungsfläche (8) des zweiten Gleitrings (5) dichtend anliegend berührt ist.

5. Gleitringdichtung nach Anspruch 4, **dadurch gekennzeichnet, dass** die beiden Dichtungsflächen (9, 10) des Gegenrings (6) einander mit radialem Abstand benachbart zugeordnet sind und dass die Gleitringe (4, 5) und der Gegenring (6) einen im wesentlichen ringförmigen Kühlraum (20) begrenzen.

6. Gleitringdichtung nach Anspruch 5, **dadurch gekennzeichnet, dass** in dem durch den Abstand gebildeten Spalt (21) zumindest eine sich in radialer Richtung (15) erstreckende Förderrippe (22) angeordnet ist.

7. Gleitringdichtung nach Anspruch 6, **dadurch gekennzeichnet, dass** in dem Spalt (21) zumindest zwei gleichmäßig in Umfangsrichtung (18) verteilte Förderrippen (22) angeordnet sind.

8. Gleitringdichtung nach einem der Ansprüche 1 bis 7, **dadurch gekennzeichnet, dass** der die Ableitung (14) aufweisende Gleitring (5) zur partiellen Erhöhung des Staudrucks im Kühlkreislauf (1) in Umfangsrichtung (18) benachbart zur Ableitung (14) eine Staukante (23) aufweist.

## Claims

1. Slide ring seal comprising a cooling circuit (1), through which liquid can flow and which has a liquid inflow (2) and a liquid outflow (3), a first slide ring (4), a second slide ring (5), which is arranged coaxially with respect to the first slide ring (4), and a counterpart ring (6), wherein the slide rings (4, 5) and the counterpart ring (6) have in each case at least one seal surface (7, 8, 9, 10), wherein the in each case at least one seal surface (7, 8) of the slide rings (4, 5) makes contact with the at least one seal surface (9, 10) of the counterpart ring (6) in a sealingly abutting manner, wherein the first slide ring (4) has at least one first cooling channel (11) which is configured as a feed line (12) or discharge line to or from the seal surfaces (7, 8, 9, 10), wherein the second slide ring (5) has at least one second cooling channel (13) which is configured as a discharge line (14) or feed line from or to the seal surfaces (7, 8, 9, 10), wherein the feed line (12) or discharge line of the first slide ring (4) and the discharge line (14) or feed line of the second slide ring (5) are arranged on those circumferential sides (16, 17) of the slide rings (4, 5) which face towards one another in a radial direction (15), and form an integral feature of the respective slide ring (4, 5), and wherein the liquid inflow (2) is connected in a flow-conducting manner to the feed line (12) and the liquid outflow (3) is connected in a flow-conducting manner to the discharge line (14), **characterized in that** the cooling channels (11, 13) are each of substantially groove-shaped form and are radially open in the direction of the in each case other slide ring (5, 4) .

2. Slide ring seal according to Claim 1, **characterized in that** each slide ring (4, 5) has at least two feed lines (12) or discharge lines (14), which are arranged so as to be distributed uniformly in a circumferential direction (18).

3. Slide ring seal according to Claim 2, **characterized in that** the at least two feed lines (12) of one slide ring (4) are assigned to the at least two discharge lines (14) of the other slide ring (5) in, as seen in the circumferential direction (18), a staggered manner (19).

4. Slide ring seal according to one of Claims 1 to 3, **characterized in that** the counterpart ring (6) has two seal surfaces (9, 10), of which one (9) is made contact with in a sealingly abutting manner by the seal surface (7) of the first slide ring (4) and one (10) is made contact with in a sealingly abutting manner by the seal surface (8) of the second slide ring (5).

5. Slide ring seal according to Claim 4, **characterized in that** the two seal surfaces (9, 10) of the counterpart ring (6) are assigned to one another adjacently with a radial spacing, and **in that** the slide rings (4, 5) and the counterpart ring (6) delimit a substantially annular cooling chamber (20) .

6. Slide ring seal according to Claim 5, **characterized in that**, in the gap (21) formed by the spacing, there is arranged at least one conveyance rib (22) extending in a radial direction (15).

7. Slide ring seal according to Claim 6, **characterized in that** at least two conveyance ribs (22), which are distributed uniformly in the circumferential direction (18), are arranged in the gap (21).

8. Slide ring seal according to one of Claims 1 to 7, **characterized in that**, for partially increasing the dynamic pressure in the cooling circuit (1), the slide ring (5) having the discharge line (14) has an accumulation edge (23) adjacent to the discharge line (14) in the circumferential direction (18).

## Revendications

1. Garniture d'étanchéité à anneaux glissants comprenant un circuit de refroidissement (1) pouvant être traversé par un liquide et pourvu d'une entrée de liquide (2) et d'une sortie de liquide (3), un premier anneau glissant (4), un deuxième anneau glissant (5) disposé coaxialement au premier anneau glissant (4), et un anneau antagoniste (6), les anneaux glissants (4, 5) et l'anneau antagoniste (6) comportant chacun au moins une surface d'étanchéité (7, 8, 9, 10), l'au moins une surface d'étanchéité (7, 8) des anneaux glissants (4, 5) venant en appui étanche sur l'au moins une surface d'étanchéité (9, 10) de l'anneau antagoniste (6), le premier anneau glissant (4) comportant au moins un premier canal de refroidissement (11) qui est conçu comme un conduit d'alimentation (12) ou d'évacuation qui s'étend vers ou depuis les surfaces d'étanchéité (7, 8, 9, 10), le deuxième anneau glissant (5) comportant au moins un deuxième canal de refroidissement (13) qui est conçu comme un conduit d'évacuation (14) ou d'alimentation qui s'étend depuis ou vers les surfaces d'étanchéité (7, 8, 9, 10), le conduit d'alimentation (12) ou d'évacuation du premier anneau glissant (4) et le conduit d'évacuation (14) ou d'alimentation du deuxième anneau glissant (5) étant disposés sur les côtés circonférentiels (16, 17) dans la direction radiale (15) des anneaux glissants (4, 5) qui sont dirigés l'un vers l'autre et faisant partie intégrante de l'anneau glissant respectif (4, 5) et l'entrée de liquide (2) étant reliée fluidiquement au conduit d'alimentation (12) et la sortie de liquide (3) étant reliée fluidiquement au conduit d'évacuation (14), **caractérisé en ce que** les canaux de refroidissement (11, 13) sont chacun conçus sensiblement en forme de rainure et sont ouverts radialement en direction de l'autre anneau glissant respectif (5, 4).

2. Garniture d'étanchéité à anneaux glissants selon la revendication 1, **caractérisée en ce que** chaque anneau glissant (4, 5) comporte au moins deux conduits d'alimentation (12) ou d'évacuation (14) qui sont répartis uniformément dans la direction circonférentielle (18).

3. Garniture d'étanchéité à anneaux glissants selon la revendication 2, **caractérisée en ce que** les au moins deux conduits d'alimentation (12) d'un anneau glissant (4) sont associés par intervalle (19) aux au moins deux conduits d'évacuation (14) de l'autre anneau glissant (5), vu dans la direction circonférentielle (18).

4. Garniture d'étanchéité à anneaux glissants selon l'une des revendications 1 à 3, **caractérisée en ce que** l'anneau antagoniste (6) comporte deux surfaces d'étanchéité (9, 10) dont l'une (9) vient en appui étanche sur la surface d'étanchéité (7) du premier anneau glissant (4) et l'une (10) vient en appui étanche sur la surface d'étanchéité (8) du deuxième anneau glissant (5).

5. Garniture d'étanchéité à anneaux glissants selon la revendication 4, **caractérisée en ce que** les deux surfaces d'étanchéité (9, 10) de l'anneau antagoniste (6) sont associées de manière adjacente l'une à l'autre radialement à distance et **en ce que** les anneaux glissants (4, 5) et l'anneau antagoniste (6) délimitent un espace de refroidissement (20) sensiblement annulaire.

6. Garniture d'étanchéité à anneaux glissants selon la revendication 5, **caractérisée en ce qu'**au moins une nervure de transport (22), qui s'étend dans la direction radiale (15), est disposée à travers l'interstice (21) formé par la distance.

7. Garniture d'étanchéité à anneaux glissants selon la revendication 6, **caractérisée en ce qu'**au moins deux nervures de transport (22), uniformément réparties dans la direction circonférentielle (18), sont disposées dans l'interstice (21).

8. Garniture d'étanchéité à anneaux glissants selon l'une des revendications 1 à 7, **caractérisée en ce que** l'anneau glissant (5), qui comporte le conduit d'évacuation (14), comporte un bord de retenue (23) de manière adjacente au conduit d'évacuation (14) dans la direction circonférentielle afin d'augmenter partiellement la pression de retenue dans le circuit de refroidissement (1).
